Europäisches Patentamt

European Patent Office

Office européen des brevets

(19)

(11) Veröffentlichungsnummer : **0 075 244**
**B1**

(12) **EUROPÄISCHE PATENTSCHRIFT**

(45) Veröffentlichungstag der Patentschrift :
26.06.85

(21) Anmeldenummer : 82108439.9

(22) Anmeldetag : 13.09.82

(51) Int. Cl.⁴ : **H 04 B  3/36,** H 04 B  3/46,
H 04 B 14/02, H 04 L 25/20

(54) Regenerator für hochfrequente digitale Signale mit einem zusätzlichen niederfrequenten Signalweg.

(30) Priorität : 17.09.81 DE 3137064

(43) Veröffentlichungstag der Anmeldung :
30.03.83 Patentblatt 83/13

(45) Bekanntmachung des Hinweises auf die Patenterteilung : 26.06.85 Patentblatt 85/26

(84) Benannte Vertragsstaaten :
AT BE CH DE FR GB IT LI LU NL SE

(56) Entgegenhaltungen :
DE-A- 2 826 675
DE-A- 3 109 059
DE-B- 2 407 680
FR-A- 2 412 990
NACHRICHTENTECHNISCHE ZEITSCHRIFT, Band 32,
Heft 9, 1979, VDE-Verlag, Berlin (West), H. BAUCH,
H.G. JUNGMEISTER, K.H. MÖHRMANN "Übertragung
von 565-Mbit/s-Signalen über Koaxialkabel", Seiten
608-611

(73) Patentinhaber : Siemens Aktiengesellschaft
Berlin und München Wittelsbacherplatz 2
D-8000 München 2 (DE)

(72) Erfinder : Wendt, Peter, Dipl.-Ing.
Badstrasse 4
D-8000 München 70 (DE)

Jouve, 18, rue St-Denis, 75001 Paris, France

EP 0 075 244 B1

## Beschreibung

Die Erfindung betrifft einen Regenerator für hochfrequente digitale Signale mit einem zusätzlichen niederfrequenten Signalweg, der insbesondere zur Übertragung von gegenüber den digitalen Signalen vergleichsweise sehr niederfrequenten Telemetriesignalen dient, mit eingangsseitiger und ausgangsseitiger Fernspeiseweiche, mit einem Impulsregenerator wobei in die Verbindung zwischen eingangsseitiger Fernspeiseweiche und Eingang des Impulsregenerators eine erste Koppelanordnung zur Auskopplung des niederfrequenten Signalwegs und in die Verbindung zwischen dem Ausgang des Impulsregenerators und der ausgangsseitigen Fernspeiseweiche eine zweite Koppelanordnung zur Einkopplung des niederfrequenten Signalwegs eingeschaltet ist und beide Koppelanordnungen jeweils eine in den Signalweg für die digitalen Signale eingeschaltete und auf die Frequenz der niederfrequenten Signale abgestimmten Anordnung enthalten, an der der niederfrequente Signalweg angekoppelt ist.

Ein derartiger Regenerator ist aus der DE-A-2 826 675 bekannt. Regeneratoren für digitale Übertragungsstrecken mit Koaxialkabeln werden üblicherweise durch das für die Übertragung der digitalen Signale dienende Koaxialkabel ferngespeist. Zur Trennung des Fernspeisestroms von den Nutzsignalen ist deshalb am Eingang und am Ausgang des Regenerators jeweils eine Fernspeiseweiche vorgesehen, durch die eine Dämpfung des Nutzsignals bei niedrigen Frequenzen verursacht werden könnte. Aus diesem Grunde wird für die übertragung des Nutzsignals eine Leitungscode mit geringer spektraler Leistungsdichte bei niedrigen Frequenzen verwendet, beispielsweise der sogenannte AMI-Code. Durch eine derartige Codierung wird außerdem der Schutz gegen Störungen, die durch Starkstrombeeinflussung oder Blitzschlag entstehen, verbessert.

Da die tiefen Frequenzanteile bei diesem Code zur Informationsübertragung wenig beitragen, ist es möglich, ein zusätzliches, vergleichsweise niederfrequentes Signal in einem Frequenzbereich zu übertragen, der frequenzmäßig oberhalb des Durchlaßbereichs der Fernspeiseweichen für den Fernspeisestrom und unterhalb der wesentlichen Signalanteile der Nutzsignale liegt. Bei einem Übertragungssystem für digitale Signale mit Bitraten oberhalb von 500 MBit/s wird der Frequenzbereich für das zusätzliche vergleichsweise niederfrequente Signal zweckmäßigerweise bei etwa 600 KHz gewählt. In diesem Frequenzbereich können ohne wesentliche Störung des Nutzsignals sowohl trägerfrequenzmäßig umgesetzte Telemetriesignale als auch trägerfrequenzmäßig umgesetzte Sprachsignale, beispielsweise von Dienstkanälen, übertragen werden. Das zusätzliche niederfrequente Signal ist im Regenerator gesondert von den Nutzsignalen aufzubereiten, also beispielsweise zu verstärken und/oder über Melde- und Überwachungseinrichtungen zu führen. Dazu ist es nötig, empfangsseitig das zusätzliche niederfrequente Signal vom Nutzsignal zu trennen und sendeseitig das zusätzliche niederfrequente Signal dem regenerierten Nutzsignal zuzusetzen.

Für die Zusammenkopplung von Signalen im Frequenzbereich von einigen 100 MHz ist die Verwendung von Richtkopplern bekannt. Da im vorliegenden Falle das anzukoppelnde Signal aber im Frequenzbereich von nur einigen 100 KHz liegt, ist die Verwendung eines Richtkopplers nicht möglich. Richtkoppler sind bekanntlich bei niedrigen Frequenzen nicht gut wirksam, da sie für diese niedrigen Frequenzen eine hohe Koppeldämpfung ergeben. Auch bei der Ankopplung der niedrigen Frequenzen über Koppelteiler oder Tiefpaßglieder ergibt sich eine hohe Koppeldämpfung für das anzukoppelnde niederfrequente Signal, sofern eine gegenseitige Beeinflussung der beiden Leitungen für die zusammenzukoppelnden Signale vermieden wird. Die Kopplung der niederfrequenten Signale wird weiterhin dadurch kompliziert, daß dem eigentlichen Impulsgenerator eingangsseitig eine Stichleitung für die Nutzsignale unmittelbar vorgeschaltet und eine weitere derartige Stichleitung ausgangsseitig nachgeschaltet ist. Diese Stichleitungen stellen für das niederfrequente Signal Kurzschlüsse dar.

Die Aufgabe der Erfindung besteht also darin, eine Möglichkeit zu finden, ein zusätzliches vergleichsweise niederfrequentes Signal in einen Signalweg für hochfrequente Signale mit Schrittgeschwindigkeiten von einigen 100 MHz in einem Zwischenregenerator ein bzw. auszukoppeln.

Erfindungsgemäß wird die Aufgabe durch einen Regenerator der eingangs erwähnten Art mit den Merkmalen des Kennzeichens des Patentanspruchs 1 gelöst. Von besonderem Vorteil bei der erfindungsgemäßen Lösung ist neben dem sehr geringem Aufwand der Verzicht auf aktive Bauelemente, also beispielsweise eine zusätzliche Fernspeiseleistung verbrauchende Verstärkerschaltung. Als weiterer Vorteil ergibt sich die vielseitige Einsetzbarkeit, da es mit der erfindungsgemäßen Anordnung möglich ist, verschiedenartige, auf einem niederfrequenten Träger aufmodulierte Signale, ein bzw. auszukoppeln, besonders vorteilhaft ist auch das Fehlen von spannungsfesten Kondensatoren.

Eine besonders einfache Möglichkeit zur Ankopplung des niederfrequenten Signalweges an den auf die Frequenz der niederfrequenten Signale abgestimmten Schwingkreis ergibt sich dadurch, daß als Schwingkreis ein Parallelschwingkreis vorgesehen ist, an den der niederfrequente Signalweg induktiv angekoppelt ist und daß der Parallelresonanz-Wirkwiderstand des Schwingkreises gleich dem Wellenwiderstand des angeschlossenen Kabel ist.

Von besonderem Vorteil ist dabei die Möglich-

keit, über die induktive Ankopplung den Parallelresonanz-Wirkwiderstand des Schwingkreises einzustellen und so Wellenwiderstandssprünge im Verbindungskabel und damit Reflexionen des niederfrequenten Signals zu vermeiden.

Im Hinblick auf die hohen Frequenzen des Nutzsignals ist eine Variante der Erfindung zweckmäßig, bei der die Schwingkreisinduktivität durch eine Leitungsdrossel gebildet ist.

Die Erfindung soll im folgenden anhand der Zeichnung näher erläutert werden. In der Zeichnung zeigt

Figur 1 ein Prinzipschaltbild eines erfindungsgemäßen Regenerators und

Figur 2 ein hinsichtlich der Koppelanordnungen detailliertes Schaltbild eines erfindungsgemäßen Regenerators.

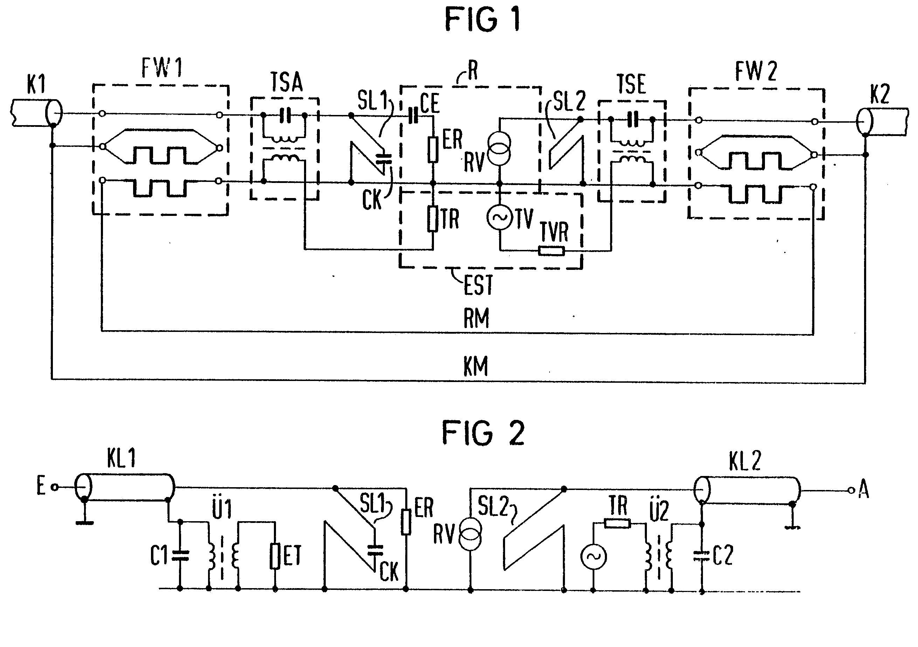

Das Prinzipschaltbild nach der Fig. 1 zeigt eine Übertragungsrichtung eines Zwischenregenerators für digitale Signale, die vom Kabel K1 zum Zwischenregenerator übertragen werden und vom Kabel K2 von diesem Zwischenregenerator zu einer Endstelle oder einem nächsten Zwischenregenerator übertragen werden. Die beiden Kabel K1, K2 dienen gleichzeitig zur Übertragung der Fernspeiseleistung für den Zwischenregenerator. Mit den Endanschlüssen der Kabel K1 bzw. K2 ist eine eingangsseitige bzw. ausgangsseitige Fernspeiseweiche FW1, FW2 verbunden, außerdem sind die Außenleiter der beiden Kabel über eine Leitung KM miteinander verbunden. Auch die äußeren Masseanschlüsse der beiden Fernspeiseweichen sind über eine Leitung RM miteinander verbunden. Mit dem ersten Ausgangsschluß der eingangsseitigen Fernspeiseweiche FW1 ist eine erste Koppelanordnung TSA zur Auskopplung des niederfrequenten Signalweges verbunden, der zweite Ausgangsanschluß dieser Fernspeiseweiche ist mit dem Bezugspotential des Regenerators R und mit einem zweiten Eingangsanschluß der ausgangsseitigen Fernspeiseweiche FW2 verbunden.

Im vorliegenden Fall sollen über den zusätzlichen niederfrequenten Signalweg niederfrequente Telemetriesignale übertragen werden. Diese Telemetriesignale werden auf ein bestimmtes Kommando hin von dem durch dieses Kommando aktivierten Regenerator in den niederfrequenten Signalweg eingespeist. Die Telemetriesignale beinhalten dabei Informationen über die in den Regeneratoren ermittelte Bitfehlerrate, die beispielsweise durch Zählung von Coderegelverletzungen in den Regeneratoren ermittelt wird. Deshalb ist in der Fig. 1 nur der Eingangswiderstand TR der Telemetrieanordnung EST dargestellt, der induktiv an den in der ersten Koppelanordnung TSA enthaltenen und auf die Frequenz der Telemetriesignale abgestimmten Schwingkreis angekoppelt ist. In der Telemetrieanordnung EST ist weiterhin ein Telemetrieverstärker TV mit dessem Innenwiderstand TVR dargestellt, der die sendeseitig abzugebenden Telemetriesignale erzeugt und diese an eine zweite Koppelanordnung TSE abgibt. In die Verbindung zwischen erster Koppelanordnung TSA und Regenerator R ist eine erste, auf die Frequenz der zu übertragenden digitalen Signale abgestimmte Stichleitung SL1 eingeschaltet. Wegen des Potentialunterschiedes zwischen den beien Anschlüssen der beiden Stichleitung ist diese am Ende nicht direkt sondern durch einen Kondensator CS wechselspannungsmäßig kurzgeschlossen. Bei der Frequenz des Telemetriesignals ist die Impedanz der ersten Stichleitung deutlich unter 1 Ohm, so daß dieses praktisch kurzgeschlossen wird und Störungen des nachgeschalteten Regenerators damit ausgeschlossen sind. Der in die Eingangsleitung längsgeschaltete Parallelschwingkreis ergibt damit zusammen mit der quergeschalteten Stichleitung eine Frequenzbandweiche, durch die das Telemetriesignal und die digitalen Signale in einfacher Weise voneinander getrennt werden.

Vom nachgeschalteten Regenerator ist eingangsseitig nur der Koppelkondensator CE und der Eingangswidersand ER dargestellt, ausgangsseitig ist der Sendeverstärker RV dargestellt, der die regenerierten digitalen Signale an die zweite Koppelanordnung TSE abgibt, wobei zwischen Ausgangsanschluß und Bezugspotential des Regenerators eine zweite Stichleitung SL2 eingeschaltet ist. Da zwischen Ausgangsanschluß des Regenerators R und Bezugspotential beim Ausführungsbeispiel gleichspannungsmäßig kein Potentialunterschied besteht, kann die zweite Stichleitung SL2 am Ende direkt kurzgeschlossen werden.

Die zweite Koppelanordnung TSE entspricht in ihrem Aufbau völlig der ersten Koppelanordnung, die Ausgangssignale der Telemetrieanordnung EST werden induktiv an den Parallelschwingkreis angekoppelt und über diesen in den Übertragungsweg für die digitalen Signale eingespeist. Mit dem zweiten Anschluß des Parallelschwingkreises der zweiten Koppelanordnung ist der erste Eingang der zweiten Fernspeiseweiche FW2 verbunden, die in ihrem Aufbau völlig der ersten Fernspeiseweiche FW1 entspricht und die Fernspeisepotential und Nutzsignal mit Telemetriesignal an den Innenleiter des zweiten Kabels K2 abgibt.

Der in den Koppelanordnungen enthaltene Parallelschwingkreis ist im Hinblick auf geringe Dämpfung des hochfrequenten digitalen Signals unter Verwendung eines induktivitätsarmen Kondensators und einer Spule mit geringer Kapazität der Windungen gegen Masse aufgebaut. Zusätzlich sind an diesen Schwingkreis induktiv mittels einer Koppelspule oder eines getrennten Übertragers die Telemetrieschaltungen angekoppelt. Dadurch treten wegen der Wicklungskapazitäten des Koppelgliedes in der Ankoppelanordnung zusätzliche Streukapazitäten auf, die sich bei hohen Bitfolgefrequenzen von einigen 100 MBit/s nicht nur durch ihre Tiefpaßwirkung ungünstig bemerkbar machen sondern auch mit der Streuinduktivität des Übertragers unerwünschte Resonanzen ergeben können.

In der Fig. 2 ist in einer detaillierten Schaltung eine Weiterbildung des erfindungsgemäßen Regenerators dargestellt, in der die Schwingkreisinduktivität der Koppelanordnungen mit Hilfe einer Koaxialleitung realisiert ist, die nach Art einer Leitungsdrossel auf einen Schalenkern aufgewickelt ist. An den Eingang E, der verglichen mit der Fig. 1 den Ausgang der ersten Fernspeiseweiche FW1 darstellt, ist der Innenleiter einer ersten koaxialen Leitung KL1 angeschlossen, wobei deren Außenleiter auf dieser Seite der Leitung mit Bezugspotential verbunden ist. Am anderen Ende der ersten koaxialen Leitung KL1 ist der Innenleiter mit dem einen Anschluß der ersten Stichleitung SL1 und mit dem Eingang ER des Regenerators verbunden. Der andere Anschluß des Außenleiters der ersten koaxialen Leitung KL1 ist über einen Kondensator C1, der dem Schwingkreiskondensator entspricht, mit Bezugspotential verbunden. Dem Kondensator C1 parallelgeschaltet ist die Primärwicklung eines ersten Übertragers Ü1, an dessen Sekundärwicklung die Empfangseinrichtung ET für den niederfrequenten Signalweg, also die Empfangseinrichtung der Telemetrieanordnung angeschlossen ist.

Die Sendeseite des Regenerators nach der Fig. 2 ist analog der Empfangsseite aufgebaut. An den Sendeverstärker RV des Regenerators ist gegen Masse die zweite Stichleitung SL2 angeschlossen, außerdem ist in die Verbindung zum Übertragungskabel eine zweite koaxiale Leitung KL2 eingeschaltet. Der Innenleiter dieser zweiten koaxialen Leitung ist auf der einen Seite mit dem Ausgang des Regeneratorverstärkers RV und auf der anderen Seite mit dem Übertragungskabel verbunden, auf der Regeneratorseite ist der Außenleiter der zweiten koaxialen Leitung über einen zweiten Kondensator C2 mit Bezugspotential verbunden, wobei diesem zweiten Kondensator die Sekundärwicklung eines zweiten Übertragers Ü2 parallelgeschaltet ist. An die Primärwicklung des zweiten Übertragers ist die Sendeeinrichtung TA des niederfrequenten Signalweges, also der Telemetriesender, mit einem Innenwiderstand TR angeschlossen. Sowohl in der Empfangs- als auch in der Sendeseite können die beiden Außenleiteranschlüsse des koaxialen Kabels vertauscht werden.

Die Kondensatoren C1 bzw. C2 bilden zusammen mit der Induktivität der als Leitungsdrossel wirkenden koaxialen Leitungen KL1, KL2 einen auf die Frequenz der Telemetriesignale abgestimmten Parallelresonanzkreis, der Wellenwiderstand der koaxialen Leitungen KL1, KL2 entspricht dem des Übertragungskabels und der Fernspeiseweiche. Die An- bzw. Abkopplung der Signale erfolgt dabei mittels eines Übertragers, dessen Hauptinduktivität groß gegenüber der Induktivität der koaxialen Leitungen ist und deshalb die Resonanzfrequenz des Parallelschwingkreises nicht wesentlich verstimmt. Die Streukapazität der Leitungsdrossel sowie die Wicklungskapazität des Übertragers bilden eine Parallelschaltung zum jeweiligen Schwingkreiskondensator, so daß eine Beeinflussung des hochfrequenten digitalen Signals nicht erfolgt. Im Hinblick auf die hohen Frequenzen des Nutzsignals wurde eine koaxiale Leitung mit niedrigen Verlusten sowie ein Schwingkreiskondensator mit niedriger Serieninduktivität sowohl ein- als auch ausgangsseitig gewählt. Untersuchungen an einem Ausführungsbeispiel haben dabei außerdem ergeben, daß durch den über die koaxialen Leitungen KL1 bzw. KL2 fließenden Fernspeisegleichstrom und die dadurch erfolgte Vormagnetisierung des verwendeten Schalenkerns kein wesentlicher Einfluß auf die Dämpfung und Reflexion im Übertragungskanal für die niederfrequenten Signale erfolgt.

Über die Telemetrieeinrichtung ergibt sich ein Nebensprechweg für die hochfrequenten digitalen Signale.

Zur Erhöhung der Dämpfung in diesem Nebensprechweg sind am Eingang und am Ausgang der Telemetrieeinrichtung Tiefpaßglieder in Form von Durchführungsfiltern vorgesehen.

**Patentansprüche**

1. Regenerator für hochfrequente digitale Signale mit einem zusätzlichen niederfrequenten Signalweg, der insbesondere zur Übertragung von gegenüber den digitalen Signalen vergleichsweise sehr niederfrequenten Telemetriesignalen dient, mit eingangsseitiger und ausgangsseitiger Fernspeiseweiche (FW1, FW2), mit einem Impulsregenerator (R), wobei in die Verbindung zwischen eingangsseitiger Fernspeiseweiche (FW1) und Eingang des Impulsregenerators (R) eine erste Koppelanordnung (TSA), zur Auskopplung des niederfrequenten Signalwegs und in die Verbindung zwischen dem Ausgang des Impulsregenerators (R) und der ausgangsseitigen Fernspeiseweiche (FW2) eine zweite Koppelanordnung (TSE) zur Einkopplung des niederfrequenten Signalwegs eingeschaltet ist und beide Koppelanordnungen jeweils eine in den Signalweg für die digitalen Signale eingeschaltete und auf die Frequenz der niederfrequenten Signale abgestimmten Anordnung enthalten, an der der niederfrequente Signalweg angekoppelt ist, dadurch gekennzeichnet, daß es sich bei der Anordnung um einen Schwingkreis handelt, wobei an den Ausgang der eingangsseitigen Fernspeiseweiche (FW1) der Innenleiter einer auf einen Schalenkern aufgewickelten Koaxialleitung angeschlossen ist und an dieser Verbindungsstelle der Außenleiter der Koaxialleitung (KL1) mit Bezugspotential verbunden ist, daß der andere Anschluß des Innenleiters des Koaxialkabels mit dem einen Anschluß einer ersten auf die Bitfrequenz der digitalen Signale abgestimmte Stichleitung (SL1) und mit dem Eingang (ER) des Impulsregenerators (R) verbunden ist, daß der andere Anschluß des Außenleiters des Koaxialkabels (KL1) über einen ersten Kondensator (C1) und die Sekundärwicklung eines ersten Übertragers (Ü1) mit Bezugspotential verbunden ist und daß die Primärwicklung des ersten Übertragers (Ü1) mit einer Empfangseinrichtung (ET) für den niederfrequenten Signalweg verbunden ist.

2. Regenerator nach Anspruch 1, dadurch gekennzeichnet, daß mit dem Ausgang des Impulsregenerators (R) eine zweite auf die Bitfrequenz der digitalen Signale abgestimmte Stichleitung (SL2) und der eine Anschluß des Innenleiters eines zweiten auf einen Schalenkern aufgewickelten Koaxialkabels (KL2) verbunden ist, daß der andere Anschluß des Innenleiters mit einer ausgangsseitigen Fernspeiseweiche (FW2) verbunden ist, daß der Außenleiter des zweiten Koaxialkabels (KL2) an der der zweiten Fernspeiseweiche benachbarten Seite mit Bezugspotential und an der anderen Seite über einen zweiten Kondensator (C2) und die dazu parallelgeschaltete Sekundärwicklung eines zweiten Übertragers (Ü2) mit Bezugspotential verbunden ist und daß die Primärwicklung des zweiten Übertragers (Ü2) mit einer Sendeeinrichtung des niederfrequenten Signalwegs verbunden ist.

**Claims**

1. A regenerator for high-frequency digital signals with an additional low-frequency signal path with serves in particular to transmit telemetry signals comparatively very low in frequency in relation to the digital signals, with an input and an output remote-feed filter (FW1, FW2), with a pulse regenerator (R), whereby a first coupling arrangement (TSA) to output-couple the low-frequency signal path is interposed the link between the input-end remote-feed filter (FW1) and the input of the pulse regenerator (R), and a second coupling arrangement (TSE) to input-couple the low frequency signal path is interposed into the link between the output of the pulse regenerator (R) and the output-end remote-feed filter (FW2), and both coupling arrangements contain an arrangement connected into the signal path for the digital signals, tuned to the frequency of the low-frequency signals and coupled to the low-frequency signal path, characterised in that the arrangement represents an resonant circuit, where the output of the input-end remote-feed filter (FW1) is connected to the inner conductor of a coaxial line wound onto a shell-type core, an at this connection point the outer conductor of the coaxial (KL1) is connected to reference potential, that the other end of the inner conductor of the coaxial cable is connected to a first end of a first stub line (SL1) tuned to the bit frequency of the digital signals, an to the input of the pulse regenerator (R), that the other end of the outer conductor of the coaxial cable (KL1) is connected via a first capacitor (C1) and the secondary winding of a first transformer (Ü1) to reference potential, and that the primary winding of the first transformer (Ü1) is connected to a receiving device (ET) for the low-frequency signal path.

2. A regenerator as claimed in Claim 1, characterised in that the output of the pulse regenerator (R) is connected to a second stub line (SL2), tuned of the bit frequency of the digital signals, an the first end of the inner conductor of a second coaxial cable (KL2), wound onto a shell-type core, that the other end of the inner conductor is connected to an output-end remote-feed filter (FW2), that the outer conductor of the second coaxial cable (KL2) is connected to reference potential on the side adjacent to the second remote-feed filter and is connected on the other side to reference potential via a second capacitor (C2) and parallel-connected secondary winding of a second transformer (Ü2), and that primary winding of the second transformer (Ü2) is connected to a transmitting device of the low-frequency signal path.

**Revendications**

1. Régénérateur pour signaux numériques à haute fréquence avec une voie de signaux additionnelle à basse fréquence, qui sert en particulier à la transmission de signaux de télémétrie de fréquence très basse comparativement aux signaux numériques, comprenant un dispositif d'aiguillage de téléalimentation (FW1, FW2) à l'entrée et à la sortie, ainsi qu'un régénérateur d'impulsions (R), un premier dispositif de couplage (TSA) pour le découplage de la voie de signaux à basse fréquence étant intercalé dans la liaison entre le dispositif d'aiguillage de téléalimentation (FW1) côté entrée et l'entrée du régénérateur d'impulsions (R) et un second dispositif de couplage (TS1) pour le couplage de la voie de signaux à basse fréquence étant intercalé dans la liaison entre la sortie du régénérateur à impulsions (R) et le dispositif d'aiguillage de téléalimentation (FW2) côté sortie, chacun des deux dispositifs de couplage contenant un dispositif intercalé dans la voie de signaux pour les signaux numériques et accordé sur la fréquence des signaux à basse fréquence, auquel est couplée la voie de signaux à basse fréquence, caractérisé en ce qu'il s'agit d'un dispositif formant un circuit oscillant, avec connexion à la sortie du dispositif d'aiguillage de téléalimentation (FW1) côté entrée du conducteur intérieur d'une ligne coaxiale enroulée sur un noyau en coquille, le conducteur extérieur de la ligne coaxiale (KL1) étant relié au potentiel de référence à ce point de raccordement, que l'autre raccordement du conducteur intérieur du câble coaxial est relié à l'une des connexions d'un premier tronçon de ligne (SL1) accordé sur la fréquence de bits des signaux numériques, ainsi qu'à l'entrée (ER) du régénérateur d'impulsions (R), que l'autre raccordement du conducteur extérieur du câble coaxial (KL1) est relié au potentiel de référence à travers un premier condensateur (C1) et l'enroulement secondaire d'un premier transformateur (Ü1) et que l'enroulement primaire du premier transformateur (Ü1) est relié à un dispositif de réception (ET) pour la voie de signal à basse fréquence.

2. Régénérateur selon la revendication 1, caractérisé en ce qu'un deuxième tronçon de ligne (SL2), accordé sur la fréquence de bits des signaux numériques, est connecté à la sortie du régénérateur d'impulsions (R) et à l'un des raccordements du conducteur intérieur d'un second câble coaxial (KL2) enroulé sur un noyau en coquille, que l'autre raccordement du conducteur intérieur est relié à un dispositif d'aiguillage de téléalimentation (FW2) côté sortie, que le conducteur extérieur du deuxième câble (KL2) est relié au potentiel de référence du côté voisin du deuxième dispositif d'aiguillage de téléalimentation et est relié de l'autre côté au potentiel de référence à travers un second condensateur (C2) et l'enroulement secondaire, monté en parallèle avec lui, d'un second transformateur (Ü2) et que l'enroulement primaire du second transformateur (Ü2) est relié à un dispositif de la voie de signal à basse fréquence.

FIG 1

FIG 2